# EUROPEAN PATENT SPECIFICATION

(11) **EP 0 815 998 B1**
(45) Date of publication and mention of the grant of the patent: **22.03.2000**
(21) Application number: 97304425.8
(22) Date of filing: 24.06.1997
(51) Int. Cl.: B23K 1/008, B23K 3/04

(54) **Brazing of aluminium articles and furnaces therefor**
Verfahren und Ofen zum Hartlöten von Aluminiumwerkstücken
Procédé et four pour le brasage d'articles en aluminium

(30) Priority: 24.06.1996 JP 19825196
(43) Date of publication of application: 07.01.1998
(73) Proprietor: KANTO YAKIN KOGYO KABUSHIKI KAISHA, Hiratsuka-shi, Kanagawa-ken (JP)
(72) Inventor: Takahashi, Susumu, Hodogaya-ku Yokohama (JP)
(74) Representative: Lord, Hilton David

(56) References cited:
- US-A- 4 416 623
- US-A- 5 538 177
- PATENT ABSTRACTS OF JAPAN vol. 018, no. 616 (M-1710), 24 November 1994 & JP 06 238433 A (KANTO YAKIN KOGYO KK), 30 August 1994,
- PATENT ABSTRACTS OF JAPAN vol. 095, no. 002, 31 March 1995 & JP 06 317380 A (KANTO YAKIN KOGYO KK), 15 November 1994,

## Description

The present invention relates to a method for brazing aluminium or aluminium alloy parts, employing a brazing solder and flux, and to furnaces, particularly continuous furnaces, suitable for such brazing, especially continuous, successive brazing.

Modern fluxes widely used in the brazing of aluminium parts include metallic fluoride fluxes disclosed, for example, in US-A-4,475,960 (Yamawaki *et al*.) and also metallic chlorides mixed with metallic fluorides, which are disclosed, for example, in US-A-4,643,348 (Takahashi). These modern fluxes are efficient in dissolving filmy oxides from aluminium surfaces and in removing oxides from the surfaces, thereby allowing brazing solders to flow freely on and into the surfaces. The amount of flux can, therefore, be minimised, thus reducing brazing costs. In addition, reduction in the amount of flux used reduces pollution, owing to the fact that the amount of water needed for washing off excess flux after brazing is minimised and, sometimes, this washing step can be eliminated altogether.

These fluxes are, furthermore, only oxidised to a very small extent in the brazing atmosphere, so that only a minimal amount of flux is necessary for this reason also. Thus, what with the relative lack of oxidation and the minimal quantity of flux used, the flux effectively neither pollutes the brazing atmosphere and barely erodes furnace structures contacting the brazing atmosphere.

To further ensure that such low amounts of fluxes are fully effective and to minimise oxidation, it has been common to use a metallic muffle, such as disclosed in US-A-4,416,623 (Takahashi), as a brazing chamber for brazing aluminium parts. This type of muffle is hermetically filled with an inert atmosphere, such as nitrogen, and the parts to be brazed are heated with a solder and flux applied to them. The aluminium, or aluminium alloy, parts are brazed at a heating temperature of 580°C-660°C, as the melting point of the fluxes described above is approximately 550°C. Indeed, a recently developed flux in this category has a melting point of only 500°C. The brazing temperature must also take into consideration the melting point of the Al-Si system solders used, these generally being employed together with the above-mentioned fluxes, for aluminium brazing. These solders typically have a melting point of between 500°C and 630°C.

Metals to form the muffles of the art are readily able to withstand such relatively low temperatures and there is generally no problem with such metallic muffles under such comparatively low heating temperatures.

However, despite the advantages of this process, one drawback is that, when the fluxes are heated, decomposed, liquidised or evaporated and come into contact with the muffle, they can damage and break the protective oxidised surface films of the heat- and rust-resisting steel comprising the metallic muffle. The steel of the muffle finally becomes spotted and this, in turn, may cause the inert atmosphere within the muffle to become polluted.

In brazing aluminium parts, nobody has considered replacing the metallic muffle with one made from other materials. This is for two reasons. The first is that the eventual corrosion of the muffle has essentially been perceived to be unavoidable. The second is that, in contrast to steel, copper-based alloys or iron-based alloys containing a small amount of aluminium, aluminium and aluminium alloy matrices were considered too sensitive to heat-treatment in a muffle made from anything other than metallic materials.

Muffles made from other materials have been disclosed in Japanese post-examination patent publication no. 7-60063 (Takahashi) and in US-A-5,538,177 (Takahashi). In the former case, steel is heated at a high temperature, in a muffle made from carbon or graphite, solely with the intention of hardening it without oxidation and decarbonisation. In the latter case, copper or iron-base alloys are welded at a very high temperature in a batch type chamber having carbon walls. However, nothing was taught about the potential damage to the chamber that may arise from fluxes if the chamber were metallic. Indeed, no damage was expected, for two reasons. First, the fluxes were used in negligible amounts and were only intended to clean the constituent aluminium parts present in a low percentage. The fluxes were not needed to render the alloys receptive to amalgamation with a solder, as no solder is used in welding. Secondly, the atmosphere in the chamber was changed repeatedly with each batch cycle so that the decomposed and vaporised fluxes could not remain in the chamber long enough to cause any damage.

We have surprisingly found that it is possible to use a muffle made essentially of carbonaceous materials, such as carbon, graphite, and carbon fibre-reinforced carbon, at least in those areas likely to come into contact with flux, and that, when filled with an inert atmosphere, use of such a muffle can largely, or substantially completely, overcome the drawbacks of using conventional, metallic muffles in the brazing of aluminium and aluminium alloys.

Thus, in a first aspect, the present invention provides a method for brazing aluminium parts and/or aluminium alloy parts, according to claim 1.

The muffle is highly heat-resistant and virtually no erosion or damage occurs even with contact with a decomposed, liquidised or vaporised flux over long periods of time. Further, the carbonaceous material of such muffles does not appear to materially affect the aluminium.

In the process of the present invention, it is preferred that those parts of the muffle potentially exposed to flux during the brazing process are composed of carbonaceous materials. In particular, it is preferred that the relevant parts of the muffle which are carbonaceous are those exposed to flux in the decomposed, liquidised or vaporised states. We prefer that the type of carbonaceous material is carbon, graphite or carbon fibre-reinforced carbon, or a mixture thereof, although other possibilities will be apparent to those skilled in the art.

The process of the present invention is advantageously carried out with a brazing solder having a melting point of about 500°C-630°C and/or a flux having a melting point of about 550°C-500°C.

Preferred furnaces are continuous furnaces, wherein the parts to be brazed are successively introduced into the chamber.

Advantageously, the chamber and/or furnace of which the chamber is part further comprises a material that reacts with any oxygen present in the atmosphere to form a thermochemically stable oxide, neither of said material nor its oxides being reactive with the carbonaceous material. The material is preferably zinc, magnesium or titanium.

In an alternative aspect, the present invention provides a method for brazing aluminium or aluminium alloy parts with a brazing solder having a melting point of 500°C-630°C and a flux of a melting point around 550°C-500°C, the brazing being made by heating the parts under an inert atmosphere wholly or partly surrounded by carbonaceous materials. Preferably, the parts are successively introduced under the inert atmosphere and the carbonaceous materials form an elongated heating chamber.

Advantageously, the inert atmosphere is contacted with those metal elements such as zinc, magnesium, and titanium which form oxides with oxygen which are thermochemically stable and not reductive by carbon.

It will be appreciated that the various embodiments and aspects of the present invention are not mutually exclusive, and that they may be recombined in any appropriate form, as will be recognised by those skilled in the art.

In a preferred embodiment, the brazing of aluminium or aluminium alloy parts is carried out with a brazing solder of a melting point of 500-630°C and a flux of a melting point of approximately 550-500°C in an inert atmosphere surrounded by carbonaceous materials, more particularly within a muffle partly or wholly made of graphite and filled with a nitrogen atmosphere.

It will be apparent that the inert atmosphere, such as nitrogen, generally within the chamber, but more particularly within the graphite muffle, prevents the flux and the aluminium parts from being oxidised further. The nitrogen is, in turn, kept in an inert state by the graphite muffle, as the oxygen gradually being brought in from the outside reacts with the carbon of the muffle and is adsorbed into the muffle. While such adsorption brings about oxidation of the muffle little by little, the muffle may be used industrially for several years.

If it is likely, or possible, that a comparatively large amount of oxygen will be brought into the muffle, such as by conveyors and aluminium parts, it is preferred that a metallic element such as zinc, magnesium or titanium is incorporated into the muffle. These elements react well with oxygen at typical heating temperatures of the furnace of 580-660°C, and these metal oxides are thermochemically stable and solid and do not chemically interact with the carbon of the muffle. Such elements capture oxygen flowing into the muffle and immobilise it, removing it from the atmosphere and helping maintain the nitrogen atmosphere inert, thereby acting as an oxygen sponge. It will be appreciated that any suitable element, preferably a metal, which reacts with oxygen, may be employed, and that the invention is not restricted to the metals named above.

In the accompanying Examples, the carbonaceous muffle was made wholly of carbon. However, it will be appreciated that this does not necessarily have to be the case. For example, those parts of the muffle which are adjacent to the inlet and outlet of the furnace, where decomposed and liquidised fluxes do not affect the muffle so severely, may be made of other suitable materials, but preferably metals, although it is still preferred that these parts be made of carbonaceous materials. Those parts exposed to the flux should at least have a carbonaceous exterior, and we prefer that those sections with maximal exposure be made essentially entirely of carbonaceous materials, especially graphite.

The present invention will subsequently be illustrated with reference to the accompanying drawings, in which:
Fig. 1 is a sectional view of principal parts of an atmosphere furnace provided with a conventional metallic muffle, and
Fig. 2 is a sectional view of principal parts of a atmosphere furnace which is provided with a carbon muffle, preferred for use in the present invention.

### EXAMPLES

### Example 1

The brazing of aluminium parts in two different furnaces was compared, in order to determine differences in furnace damage, particularly muffle damage, as well as to determine the effects on the nature of the atmospheric conditions maintained in the muffles.

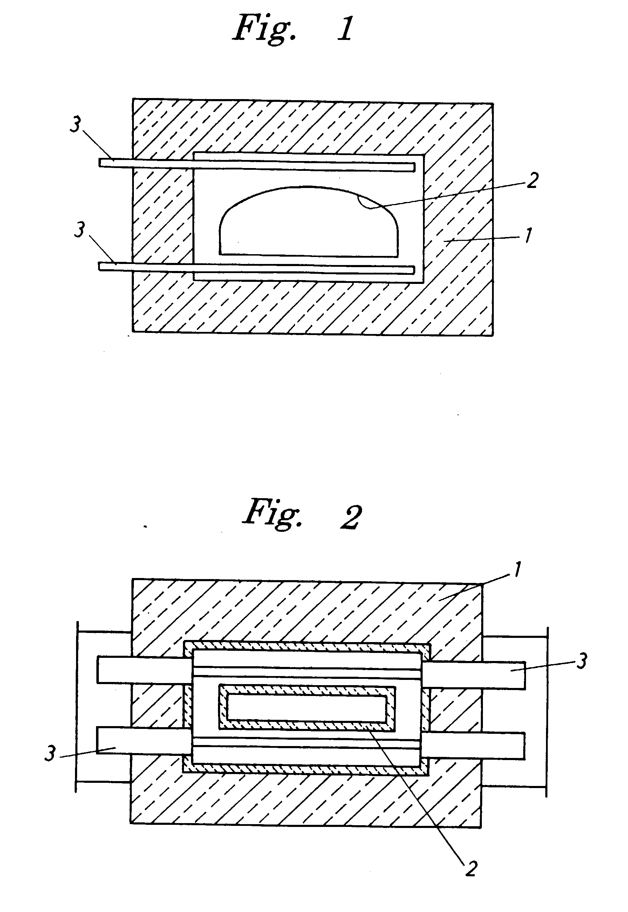

The first furnace had a conventional metallic muffle constituting a brazing chamber and was made of a steel plate of the 20Cr20Ni type illustrated in Fig. 1. The second furnace was provided with a carbonaceous muffle made by sintering pure graphite and is illustrated in Fig. 2. After the brazing operation had been conducted with the metallic muffle for 342 hours, the muffle had holes in the hearth and the atmosphere was, accordingly, adversely affected. By way of contrast, the furnace with the carbonaceous muffle was still running normally, even after 1200 hours.

In this test, each of the muffles (2) of the first and second-mentioned furnaces, that were run for tests, had an elongated tunnel-like shape having a width of 600 mm, a length of 6,000 mm, and an actual height of 180 mm. The muffles were heated and kept at 600°C by heating elements (3), and highly pure nitrogen was supplied into the top of the muffle at a rate of 30m³ per hour. Aluminium parts to be brazed were coated with a Al-Si system brazing sheet having a melting point of 590°C, adhered with 60g of an alkali metal chloride flux mixed with a fluoride flux, the mixture having a melting point of 547°C. The aluminium parts were successively conveyed into each furnace and brazed therein at a rate of 60 pieces per hour. Numeral (1) in Figs. 1 and 2 represents heat-insulating sheathings.

The amount of oxygen in the muffles, into which highly pure nitrogen was supplied as described above, normally stayed as low as 25-55 ppm. However, the amount of oxygen in the metallic muffle rose to 300-880 ppm after 342 hours, as air entered into the muffle through the perforated parts of the hearth. Once the oxygen level in the muffle exceeded 300 ppm, about 90% of those aluminium parts which passed through the metallic muffle were not brazed well. In contrast, the oxygen level in the carbonaceous muffle was still normal, even after the brazing operation had been run for 1,200 hours.

### Example 2

Aluminium parts having tubular pockets in which air had been caught were brazed at a rate of 60 pieces per hour, using the furnace provided with the carbonaceous muffle (2) as described in Example 1. The amount of oxygen in the nitrogen atmosphere within the muffle rose to 110 ppm, on account of the air present in the pockets. Plates of titanium were fitted onto the hearth of the muffle and to the jigs supporting the aluminium parts, and the brazing operation was restarted. The resulting parts were brazed satisfactorily. The oxygen level in the muffle was reduced to 30-50 ppm, as the titanium plates reacted with the oxygen in the furnace atmosphere, trapping the oxygen as a metal oxide.

### Example 3

Example 2 was repeated, except that instead of using the titanium plates, metallic zinc vapour were supplied with the nitrogen through the top of the carbonaceous muffle. The amount of oxygen in the muffle was maintained in a range of 10-25 ppm, producing parts which had been brazed very successfully.

As shown above, the successful brazing of aluminium or aluminium alloy parts and articles with a solder and flux may be carried out in accordance with the present invention under an inert atmosphere in stable conditions for long periods.

## Claims

1. A method for brazing aluminium parts and/or aluminium alloy parts, wherein brazing is carried out continuously with a brazing solder and flux by heating the parts in a muffle, the heating being carried out using heating elements located outside the muffle, the muffle having an inert atmosphere and being composed wholly or partly of carbonaceous materials.

2. The method according to claim 1, wherein the inert atmosphere is contacted with metal elements such as zinc, magnesium and titanium which make, with oxygen, such oxides which are thermochemically stable and not reductive by carbon.

3. A method according to claims 1 or 2, wherein the solder has a melting point of about 500°C-630°C and the flux has a melting point of about 550°C-500°C.

## Patentansprüche

1. Verfahren zum Hartlöten von Teilen aus Aluminium und/oder Aluminiumlegierung, wobei das Hartlöten kontinuierlich mit einem Hartlot und einem Flußmittel durch Erhitzen der Teile in einer Muffel ausgeführt wird, wobei das Erhitzen unter Verwendung von Heizelementen erfolgt, die außerhalb der Muffel angeordnet sind, wobei die Muffel eine inerte Atmosphäre aufweist und ganz oder teilweise aus kohlenstoffhaltigen Materialien besteht.

2. Verfahren nach Anspruch 1, wobei die inerte Atmosphäre mit Metallelementen wie z. B. Zink, Magnesium und Titan in Kontakt gebracht wird, die mit Sauerstoff Oxide bilden, die thermochemisch beständig und nicht durch Kohlenstoff reduzierbar sind.

3. Verfahren nach Anspruch 1 oder 2, wobei das Lot einen Schmelzpunkt von etwa 500°C-630°C aufweist und das Flußmittel einen Schmelzpunkt von etwa 550°C-500°C aufweist.

## Revendications

1. Procédé pour le brasage de pièces en aluminium et/ou de pièces en alliage d'aluminium, dans lequel le brasage est réalisé en continu avec un métal d'apport de brasage et un flux en chauffant les pièces dans un four à moufle, le chauffage étant réalisé en utilisant des éléments de chauffage situés à l'extérieur du moufle, le moufle présentant une atmosphère inerte et étant composé totalement ou en partie de matériaux carbonés.

2. Procédé suivant la revendication 1, dans lequel l'atmosphère inerte est mise en contact avec des éléments métalliques tels que du zinc, du magnésium et du titane qui donnent, avec de l'oxygène, des oxydes qui sont stables du point de vue thermochimique et qui ne sont pas réduits par du carbone.

3. Procédé suivant la revendication 1 ou 2, dans lequel le métal d'apport présente un point de fusion d'environ 500°C-630°C et le flux présente un point de fusion d'environ 550°C-500°C.
